# EUROPEAN PATENT APPLICATION

(11) **EP 4 039 541 A1**
(43) Date of publication of application: **10.08.2022**
(21) Application number: 20870713.3
(22) Date of filing: 28.09.2020
(51) Int. Cl.: B60Q 1/34

(54) **LIGHTING CONTROL DEVICE AND LIGHTING CONTROL METHOD FOR VEHICULAR LAMP, AND VEHICULAR LAMP SYSTEM**

(30) Priority: 30.09.2019 JP 2019178406
(71) Applicant: STANLEY ELECTRIC CO., LTD., Tokyo 153-8636 (JP)
(72) Inventor: NAKASHIMA Wataru, Tokyo 153-8636 (JP); KITA Yasushi, Tokyo 153-8636 (JP); KIMURA Takako, Tokyo 153-8636 (JP); KUDO Kouki, Tokyo 153-8636 (JP); KUMAKURA Akihisa, Tokyo 153-8636 (JP); OKADA Hidetaka, Tokyo 153-8636 (JP); OYAMA Shuto, Tokyo 153-8636 (JP)
(74) Representative: Schmidbauer, Andreas Konrad
(86) International application number: PCT/JP2020/036668
(87) International publication number: WO 2021/065816

(57) **Abstract**

To reduce a sense of discomfort during sequential blinking. A lighting controller for a vehicular lamp to control lighting of the vehicular lamp, where the lighting controller is configured to carry out control of moving a bright spot within the light emitting region in a predetermined direction, the bright spot obtained by lighting on a partial region of a light emitting region of the vehicular lamp, and during that time, the bright spot is moved so as to partially overlap a first region which is a partial region corresponding to the bright spot during a first period and a second region which is a partial region corresponding to the bright spot during a second period which follows the first period.

## Description

### TECHNICAL FIELD

The present invention relates to a vehicular lamp system used as a turn lamp (direction indicator lamp), for example.

### BACKGROUND ART

As a type of a turn lamp used in a vehicle, there is known a plurality of light emitting units which are sequentially turned on with a time lag (refer to Patent Document 1, for example). Here, such a lighting method is called sequential blinking. A vehicular lamp which performs such sequential blinking is controlled so as to repeat an operation in which each light emitting unit is sequentially turned on from the inner side to the outer side of the vehicle and then all the light emitting units are turned off at the same time, for example.

In a vehicular lamp which performs sequential blinking as described above, consider a case where the size of a region (a bright spot) that is lighted on at a certain timing is increased in order to further improve its visibility. In this case, for example, it is conceivable to light on a plurality of light emitting units simultaneously at every predetermined timing, or to increase the size of each light emitting unit itself. However, since the width of the area where the turn lamp can be installed is limited, the number of bright spots which can be formed from one end to the other end of the turn lamp cannot be drastically increased. Therefore, for example, when the bright spot is moved relatively quickly, movement of the bright spot ends immediately, which may cause a sense of discomfort as a sequential blinking lamp. On the other hand, for example, when the bright spot is moved relatively slowly, the movement of the bright spot does not end immediately, but the movement does not become smooth, which may also cause a sense of discomfort as a sequential blinking lamp.

### PRIOR ART DOCUMENT

### PATENT DOCUMENT

Patent Document 1: Japanese Patent No. 6066829

### SUMMARY OF THE INVENTION

In a specific aspect, it is an object of the present invention to provide a technique capable of reducing a sense of discomfort during sequential blinking.
(1) A lighting controller for a vehicular lamp according to one aspect of the present invention is (a) a lighting controller to control lighting of the vehicular lamp (b) where the lighting controller is configured to carry out control of moving a bright spot within the light emitting region in a predetermined direction, the bright spot obtained by lighting on a partial region of a light emitting region of the vehicular lamp, and during that time, the bright spot is moved so as to partially overlap a first region which is a partial region corresponding to the bright spot during a first period and a second region which is a partial region corresponding to the bright spot during a second period which follows the first period.
(2) A lighting controller for a vehicular lamp according to one aspect of the present invention is (a) a lighting controller to control lighting of the vehicular lamp (b) where the lighting controller is configured to carry out control of lighting on and off a light emitting region of the vehicular lamp and during the light-on period, to carry out control of moving a dark spot within the light emitting region in a predetermined direction, the dark spot obtained by lighting off a partial region within the light emitting region, and during that time, the dark spot is moved so as to partially overlap a first region which is a partial region corresponding to the dark spot during a first period and a second region which is a partial region corresponding to the dark spot during a second period which follows the first period.
(3) A control method for a vehicular lamp according to one aspect of the present invention is (a) a control method to control lighting of the vehicular lamp (b) where the control method is configured to carry out control of moving a bright spot within the light emitting region in a predetermined direction, the bright spot obtained by lighting on a partial region of the light emitting region of the vehicular lamp, and during that time, the bright spot is moved so as to partially overlap a first region which is a partial region corresponding to the bright spot during a first period and a second region which is a partial region corresponding to the bright spot during a second period which follows the first period.
(4) A control method for a vehicular lamp according to one aspect of the present invention is (a) a control method to control lighting of the vehicular lamp (b) where the control method is configured to carry out control of lighting on and off a light emitting region of the vehicular lamp, and during the light-on period, to carry out control of moving a dark spot within the light emitting region in a predetermined direction, the dark spot obtained by lighting off a partial region of the light emitting region, and during that time, the dark spot is moved so as to partially overlap a first region which is a partial region corresponding to the bright spot during a first period and a second region which is a partial region corresponding to the bright spot during a second period which follows the first period.
(5) A vehicular lamp system according to one aspect of the present invention is a vehicular lamp system including any one of the lighting controllers described above and a vehicular lamp controlled by the lighting controller.

According to the above configurations, a sense of discomfort during sequential blinking can be reduced.

### BRIEF DESCRIPTION OF THE DRAWINGS

Fig. 1 is a block diagram showing a configuration of a vehicular lamp system according to one embodiment.
Fig. 2 is a plan view showing an external configuration of the lamp unit.
Fig. 3 is a diagram for explaining an operating state of the vehicular lamp system of the present embodiment.
Figs. 4A to 4D are timing charts showing LED drive current waveforms corresponding to each light emitting unit of the lamp unit.
Figs. 5A and 5B are diagrams for explaining another operating state of the vehicular lamp system.
Figs. 6A to 6D are diagrams for explaining another operating state of the vehicular lamp system.
Fig. 7 is a diagram for explaining an operating state of a modified example of the vehicular lamp system.
Figs. 8A to 8D are timing charts showing LED drive current waveforms corresponding to each light emitting unit of the lamp unit in the modified example in which the dark spot is moved.

### MODE FOR CARRYING OUT THE INVENTION

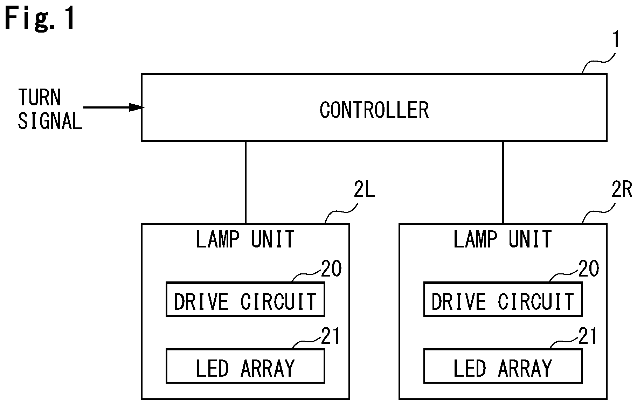

Fig. 1 is a block diagram showing a configuration of a vehicular lamp system according to one embodiment. The illustrated vehicular lamp system is used as a direction indicator lamp (a turn lamp), and is configured to include a controller 1 and a pair of lamp units (vehicular lamps) 2L and 2R whose operation is controlled by the controller 1, for example.

When a turn signal which indicates that the direction indicator has been operated is input from the vehicle, the controller 1 controls the lighting state of either the lamp unit 2L or 2R according to the turn signal, and instructs to irradiate light which indicates the vehicle travel direction.

The pair of lamp units 2L and 2R are configured to include a drive circuit 20 and an LED array 21, respectively. The lamp unit 2L is installed on the left side of the front part of the vehicle. The lamp unit 2R is installed on the right side of the front part of the vehicle. Similarly, a pair of lamp units may be installed on the left and right sides of the rear part of the vehicle. For the sake of simplicity, in the present embodiment, only a pair of lamp units 2L and 2R installed at the front of the vehicle will be considered.

The drive circuit 20 provides drive power to each LED (light emitting element) included in the LED array 21, and lights on and off each LED.

The LED array 21 has a plurality of LEDs, and each LED is made to emit light by the drive power supplied by the drive circuit 20.

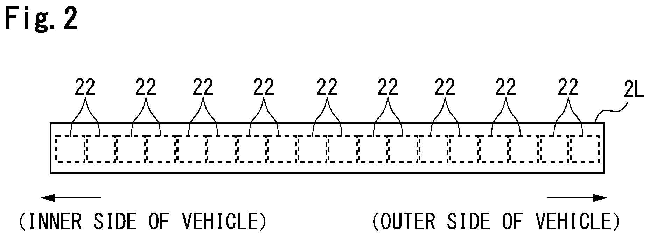

Fig. 2 is a plan view showing an external configuration of the lamp unit. Although only the lamp unit 2L is shown here, the lamp unit 2R is bilaterally symmetrical and has the same configuration. As shown in the figure, the lamp unit 2L has a plurality of light emitting units 22 (eighteen in the illustrated example) arranged from the inner side (center side) of the vehicle to the outer side of the vehicle. Each light emitting unit 22 is associated with one or more LEDs included in the LED array 21, and can be individually lighted on and off by the control of the drive circuit 20, and its brightness (luminance) can be set freely. In the following, for convenience of explanation, it is assumed that one LED is associated with each light emitting unit 22.

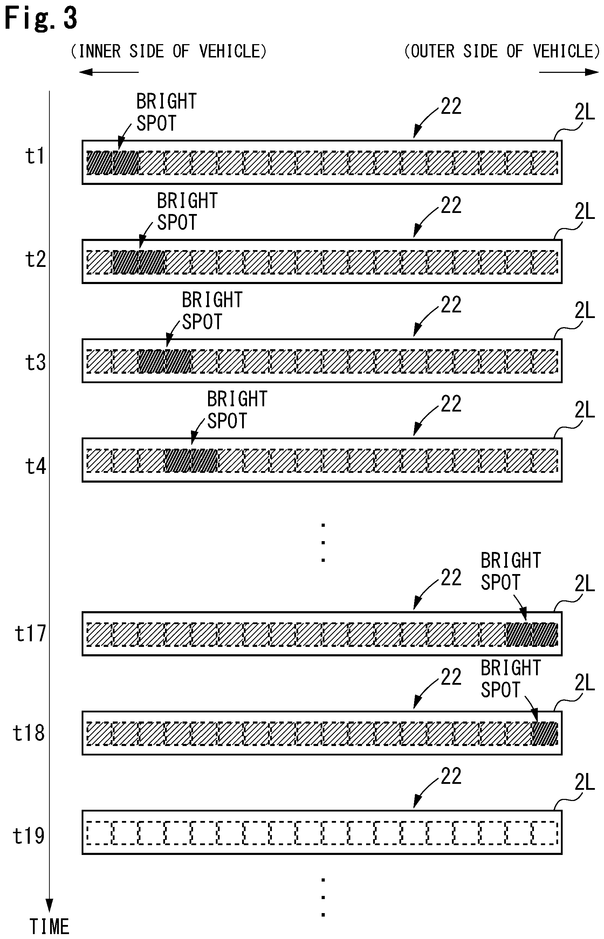

Fig. 3 is a diagram for explaining an operating state of the vehicular lamp system of the present embodiment. Hereinafter, the lamp unit 2L will be described, but note that the lamp unit 2R is bilaterally symmetrical and also operates in the same manner.

When the turn signal is input, at time t1, of each light emitting unit 22 of the lamp unit 2L, each LED corresponding to each light emitting unit 22 except for two of the light emitting units 22 of the lamp unit 2L at the inner side of the vehicle is driven by a rated current, and from each light emitting unit 22, light with a first luminance is emitted. Here, since luminance of the corresponding LEDs in each light emitting unit 22 may vary, the above-described "first luminance" does not necessarily need to be a constant value, and for example, luminance value within an error range of about ± 10% is allowable.

At the above-described time t1, the LEDs corresponding to the two inner light emitting unit 22 are temporarily driven with a current higher than the rated current, and these light emitting units 22 emit light with a second luminance which is higher than the first luminance. As a result, a bright spot which is a partial region with a higher luminance than the other light emitting units 22 is formed at a position corresponding to the two light emitting units 22 at the inner side of the vehicle.

At the next time t2, drive current of the LED corresponding to one light emitting unit 22 at the inner side is returned to the rated current, and light is emitted with the first luminance from this light emitting unit 22. Further, at this time t2, drive current of the LED corresponding to the second innermost light emitting unit 22 is maintained at a current higher than the rated current, and furthermore, drive current of the LED corresponding to the third innermost light emitting unit 22 is executed at a current higher than the rated current. Thus, light is emitted from these two light emitting units 22 with the second luminance which is higher than the first luminance. As a result, a bright spot which is a partial region with a higher luminance than the other light emitting units 22 is formed at a position corresponding to the light emitting units 22 at the second and third innermost side of the vehicle.

Similarly, at time t3, t4, ..., t9, two light emitting units 22 which are driven by a current higher than the rated current are sequentially switched. As a result, as shown in the figure, the bright spot formed by the emission of light with the second luminance moves sequentially from the inner side of the vehicle to the outer side of the vehicle. Then, when the bright spot moves, a partial region of a region (a first region) corresponding to the bright spot during a first period (for example, between time t1 and t2), or a partial region of the bright spot in the moving direction to describe in detail, remains to overlap as being a partial region of a region (a second region) corresponding to the bright spot during a second period which follows the first period (for example, between time t2 and t3). In the present embodiment, a partial region of the bright spot is a region corresponding to one light emitting unit 22. In this way, by realizing apparent movement of the bright spot while allowing a partial region of the bright spot to maintain its luminance until the following period, the size of the bright spot can be made relatively large and its movement can be smoothed as well. Thereafter, for a certain period of time at and after time t19, all light emitting units 22 are lighted off. After the light-off period has elapsed, the next cycle starts, and the operation at and after time t1 is repeated.

Each light emitting unit 22 of the lamp unit 2L maintains a state of emitting light with the first luminance as a whole between time t1 and time t18. Hereinafter, this state is referred to as a base lighting (state). In this way, in a situation where each light emitting unit 22 is in a base lighting state, the bright spot is sequentially moved by sequentially switching the two light emitting units 22 which emit light with the second luminance while partially overlapping. For a certain period of time at and after time t19, all light emitting units 22 are lighted off. By combining these operations, the lamp unit 2L repeatedly blinks (lights on and off) at a fixed interval as a whole, and operates so that the bright spot moves from the inner side of the vehicle to the outer side of the vehicle within the light-on period. That is, it is possible to realize a direction indicator display in which sequential blinking is superimposed on a conventional direction indicator with a simple blinking function.

Here, when a hazard signal is supplied instead of a turn signal, the lamp units 2L and 2R may be operated at the same time by the above-described control method.

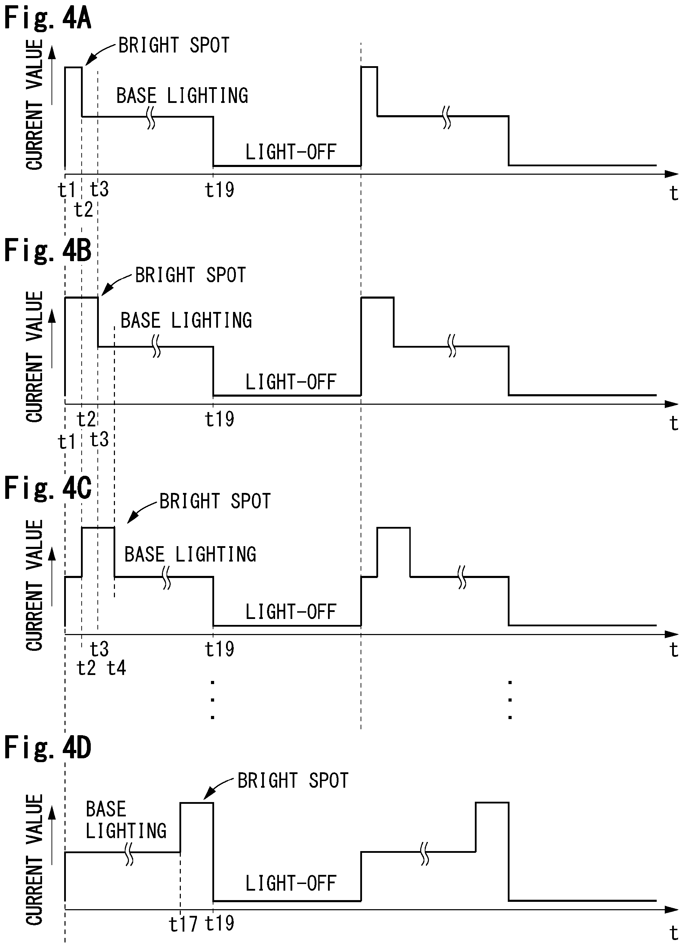

Figs. 4A to 4D are timing charts showing LED drive current waveforms corresponding to each light emitting unit of the lamp unit. Here, the drive current for the lamp unit 2L will be described, but the same applies to the lamp unit 2R. Fig. 4A is a drive current waveform of the LED corresponding to the innermost light emitting unit 22. Fig. 4B is a drive current waveform of the LED corresponding to the second innermost light emitting unit 22. Fig. 4C is a drive current waveform of the LED corresponding to the third innermost light emitting unit 22. Fig. 4D is a drive current waveform of the LED corresponding to the outermost light emitting unit 22.

As shown in Fig. 4A, at time t1, the drive current of the LED corresponding to the innermost light emitting unit 22 is set higher than the rated current, and this state is maintained until time t2, after which the drive current is returned to the rated current. As a result, during the period from time t1 to t2, the light emitted from the region corresponding to the light emitting unit 22 becomes the second luminance and a bright spot is formed in this region. Further, as shown in Fig. 4B, at time t1, the drive current of the LED corresponding to the second innermost light emitting unit 22 is set higher than the rated current, and this state is maintained until time t3, after which the drive current is returned to the rated current. As a result, during the period from time t1 to t3, the light emitted from the regions corresponding to the light emitting unit 22 become the second luminance and a bright spot is formed in the regions. By combining the bright spots, a bright spot having a size corresponding to two light emitting units 22 is formed between time t1 and t2 (refer to FIG. 3). Here, as shown in Figs. 4A to 4D, since the drive current of the LEDs corresponding to the other light emitting units 22 are set to the rated current, the lights emitted from the regions corresponding to the other light emitting units 22 become the first luminance (base lighting state) .

As described above, during the period from time t1 to t3, the light emitted from the region corresponding to the second innermost light emitting unit 22 becomes the second luminance and a bright spot is formed in this region. Further, as shown in Fig. 4C, at time t2, the drive current of the LED corresponding to the third innermost light emitting unit 22 is set higher than the rated current, and this state is maintained until time t4, after which the drive current is returned to the rated current. As a result, during the period from time t2 to t4, the light emitted from the regions corresponding to the light emitting unit 22 become the second luminance and a bright spot is formed in the regions. By combining the bright spots, a bright spot having a size corresponding to two light emitting units 22 is formed between time t2 and t3 (refer to FIG. 3). Here, as shown in Figs. 4A to 4D, since the drive current of the LEDs corresponding to the other light emitting units 22 are set to the rated current, the lights emitted from the regions corresponding to the other light emitting units 22 become the first luminance (base lighting state) .

The drive current is similarly provided at subsequent time periods. Further, as shown in Fig. 4D, at time t17, the drive current of the LED corresponding to the outermost light emitting unit 22 is set higher than the rated current, and this state is maintained until time t19, after which the drive current is returned to the rated current. As a result, during the period from time t17 to t19, the light emitted from the regions corresponding to the light emitting unit 22 become the second luminance and a bright spot is formed in the regions (refer to Fig. 3). Here, between time t17 and t18, the light emitted from the region corresponding to the light emitting unit 22 on the left adjacent side also becomes the second luminance, and during this period, the size of the bright spot becomes the size corresponding to two light emitting units 22. Further, as shown in Figs. 4A to 4D, since the drive current of the LEDs corresponding to the other light emitting units 22 are set to the rated current, the lights emitted from the regions corresponding to the other light emitting units 22 become the first luminance (base lighting state).

Thereafter, at time t19, drive current for all of the light emitting units 22 is turned off, and each light emitting unit 22 becomes a light-off state. The light-off period is set to the same length as the period from time t1 to time t19, for example. Here, the length between a certain time (for example, time t1) and the following time (for example, time t2) is preferably set to about 35 ms, for example.

Based on the control of the controller 1, by providing drive current from the drive circuit 20 to the LED array 21 as described above, it is possible to realize a direction indicator display in which sequential blinking is superimposed on a conventional direction indicator with a simple blinking function, as shown in Fig. 3.

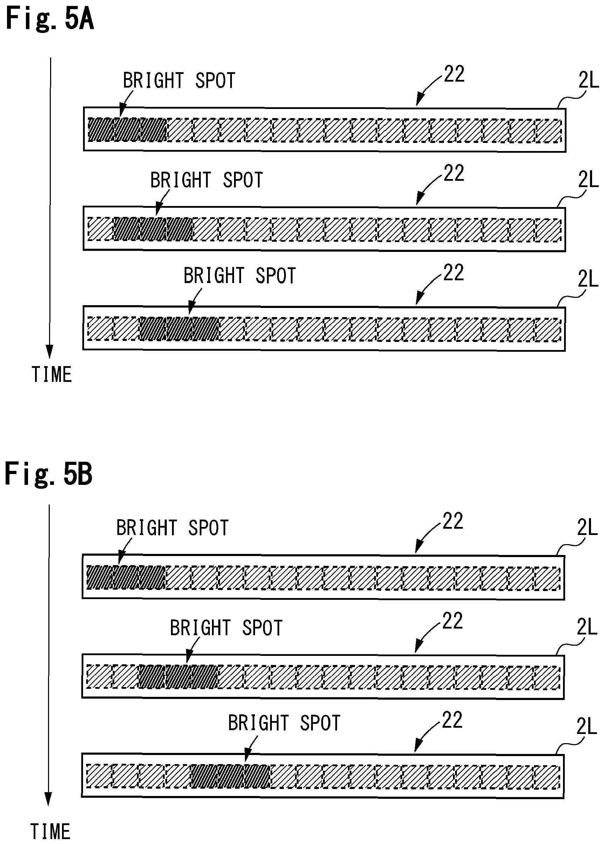

Figs. 5A and 5B are diagrams for explaining another operating state of the vehicular lamp system. In the example shown in FIG. 3 which is described above, two light emitting units 22 are simultaneously lighted on with the second luminance to form a bright spot, but more light emitting units 22 may be simultaneously lit to form a bright spot. For example, in the example shown in FIG. 5A, three light emitting units 22 are simultaneously lighted on to form a bright spot, and with the passage of time, one light emitting unit 22 on the left side is lighted off and one light emitting unit 22 on the right side is lighted on instead. As a result, the regions corresponding to two light emitting units 22 of the bright spots overlap before and after the movement of the bright spot. Similarly, in the example shown in FIG. 5B, three light emitting units 22 are simultaneously lighted on to form a bright spot, and with the passage of time, the two light emitting units 22 on the left side are lighted off and the two light emitting units 22 on the right side are lighted on instead. As a result, the regions corresponding to one light emitting unit 22 of the bright spots overlap before and after the movement of the bright spot. That is, by continuously lighting on the light emitting units 22 which is one or more less than the total number of light emitting units 22 which corresponds to the bright spot, it is possible to provide overlapping regions before and after the movement of the bright spot. According to such an embodiment, while maintaining the smoothness of the bright spot movement, the bright spot size can be increased.

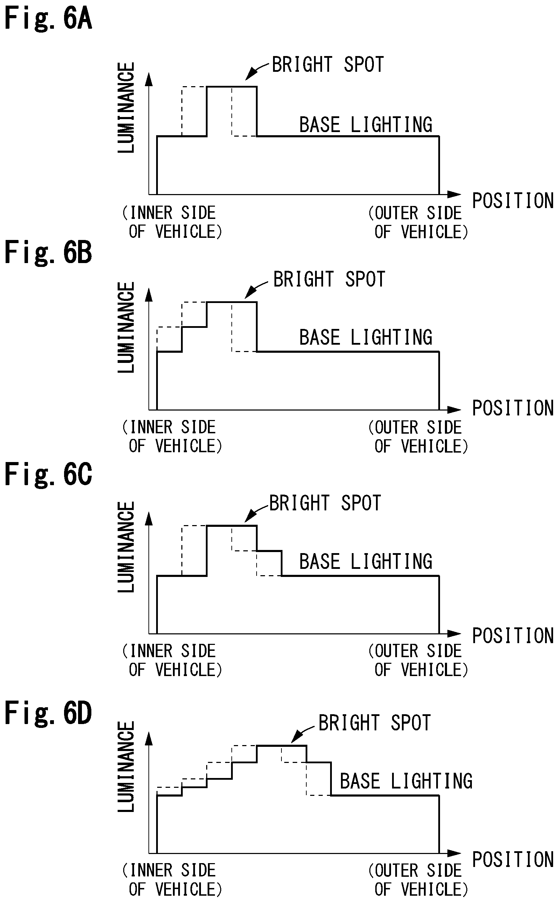

Figs. 6A to 6D are diagrams for explaining another operating state of the vehicular lamp system. Here, the vertical axis corresponds to luminance and the horizontal axis corresponds to the position in the left-right direction of the lamp unit 2L, and the luminance distribution of the light emitted from each light emitting unit 22 is shown. In the above-described embodiment, as shown in FIG. 6A, a partial region of the first luminance region corresponding to the base lighting state becomes the second luminance region which corresponds to the bright spot. Whereas, as shown in FIG. 6B, for example, before returning from the second luminance region to the first luminance region, a region having a luminance intermediate between the two may be provided. In the illustrated example, while returning from the second luminance to the first luminance, two stages of luminance are provided, but one stage or three or more stages may be provided. Similarly, as shown in FIG. 6C, for example, prior to changing from the first luminance region to the second luminance region, a region having a luminance intermediate between the two may be provided. In the illustrated example, while changing from the first luminance to the second luminance, two stages of luminance are provided but one stage or three or more stages may be provided. Further, as shown in FIG. 6D, before and after the second luminance region, a step-wise luminance region may be provided . These controls can be carried out by increasing or decreasing the drive current supplied to the LED which corresponds to the light emitting unit 22 in each region. In this way, to the region which correspond to the bright spot, by setting luminance distribution in which the luminance gradually decreases in either the same direction as the the bright spot moving direction or the opposite direction as the the bright spot moving direction or both of the directions, a sudden luminance change between the first luminance and the second luminance can be mitigated and a smoother luminance change can be obtained. In particular, by adopting an embodiment as shown in FIG. 6D, luminance change becomes smooth like a wave.

Here, in the description so far, a plurality of light emitting units arranged in the vehicle width direction has been exemplified, but the arranging direction of each light emitting unit is not limited thereto. For example, each light emitting unit may be arranged from the lower side of the vehicle toward the upper side of the vehicle, or may be arranged in an oblique direction, or may be arranged in combination of a plurality of arranging directions. According to these, a bright spot can be moved from the lower side of the vehicle to the upper side of the vehicle, or the bright spot can be moved in an oblique direction, or the bright spot can be moved in combination of a plurality of arranging directions. Further, the shape and area of each light emitting unit do not necessarily have to be the same.

According to the above embodiments, since it is possible to realize a direction indicator display in which sequential blinking is superimposed on a direction indicator with a simple blinking function and the size of the bright spot can be made relatively large and its movement can be smoothed during the display, a sense of discomfort during sequential blinking can be reduced.

Further, since the movement of the bright spot is a so-called apparent movement, it is possible to further increase the awareness and conspicuity toward the direction indicator display without drastically raising the luminance of the regions in the base lighting state. That is, the visibility of the luminance can be improved without drastically increasing the drive current. Furthermore, by moving the bright spot, it is possible to improve immediate awareness from all viewing angles and realize a new appearance with a good impression.

Further, since all the regions except for the region corresponding to the bright spot are lighted on at the same time in the base lighting state, it is possible to instantly verify the light-on state within all viewing angles of the light distribution range as compared with the conventional sequential turn lamp. Thus, for example, even when a portion of a lamp unit is blocked by a shielding object (for example, a motorcycle), the turn lamp can be easily verified.

Further, since the regions in the base lighting state are lighted on and off as a whole, the whole lamp including every light emitting unit is recognized as one group. This stems from the law of common fate in Gestalt psychology. Since the bright spot is made to move (apparent movement) within the regions which is recognized as one group, the movement of the bright spot does not interfere with the recognition of blinking of the whole group.

The present invention is not limited to the contents of the above-described embodiments, and can be variously modified and implemented within the scope of the gist of the present invention. For example, in the above-described embodiment, rise timing of the base lighting and rise timing of the first bright spot are set at the same time, but the two may be set to be different. Similarly, fall timing of the base lighting and fall timing of the last bright spot are set at the same time, but the two may be set to be different. Further, the repeating cycle of the bright spot movement and the repeating cycle of the base lighting do not have to be the same.

Further, the moving speed of the bright spot does not have to be constant, and may be gradually increased, or may be gradually decreased, or may be irregularly changed, for example. Further, the number of bright spots formed at a certain time is not limited to one, and two or more bright spots may be formed and moved at the same time. Further, the area and shape of the bright spot do not have to be constant, and the area may be gradually increased or the area may be gradually decreased, or the area and/or the shape may be changed irregularly, for example.

Further, in the above-described embodiments, cases have been described where the bright spot is made to move within the light emitting region which is in the base lighting state, but a dark spot may be made to move instead of the bright spot by a similar control.

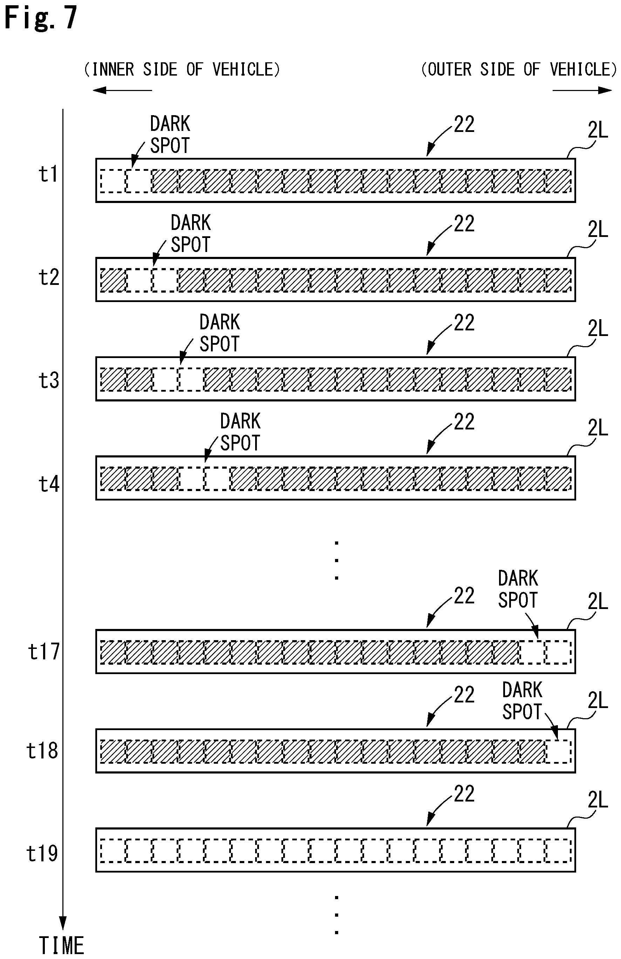

Fig. 7 is a diagram for explaining an operating state of a modified example of the vehicular lamp system. As shown in the illustrated example, instead of the bright spot as described in the above embodiments, a dark spot (which is a region with a third luminance that is lower than the first luminance) is controlled so as to move sequentially with lapse of time. During that time, a partial region of the dark spot is controlled to move while overlapping.

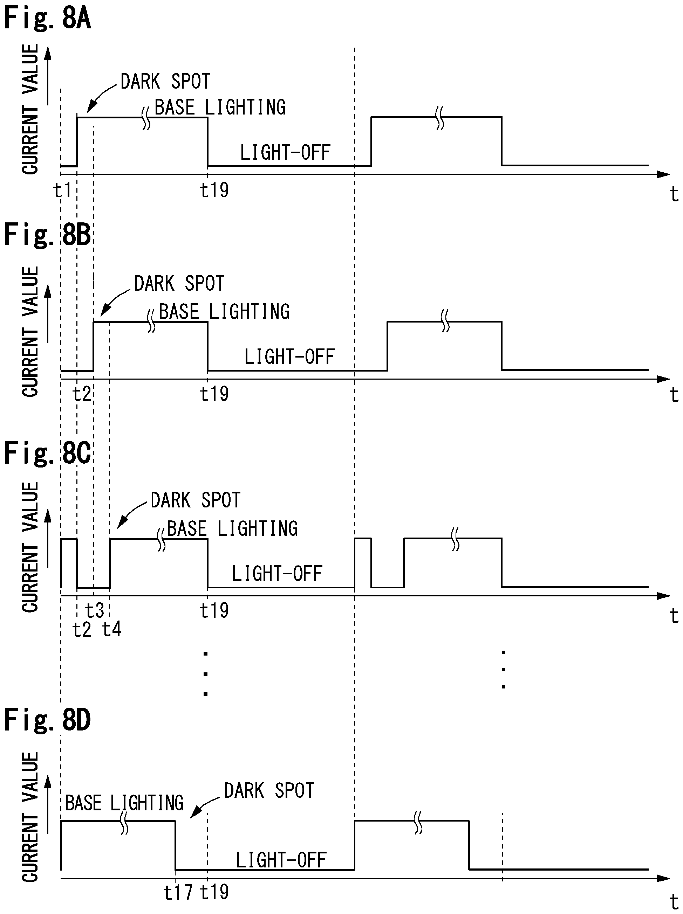

Figs. 8A to 8D are timing charts showing LED drive current waveforms corresponding to each light emitting unit of the lamp unit in the modified example in which the dark spot is moved. Fig. 8A is a drive current waveform of the LED corresponding to the innermost light emitting unit 22. Fig. 8B is a drive current waveform of the LED corresponding to the second innermost light emitting unit 22. Fig. 8C is a drive current waveform of the LED corresponding to the third innermost light emitting unit 22. Fig. 8D is a drive current waveform of the LED corresponding to the outermost light emitting unit 22. As shown in each figure, in the case of the bright spot, the drive current is set to be higher than the rated current, whereas, in the case of the dark spot, the drive current is temporarily set to be smaller than the rated current. In the illustrated example, the magnitude of the drive current of the dark spot is the same as that of the light-off state, but the level of the drive current of the two may be different.

Based on the control of the controller 1, by providing drive current from the drive circuit 20 to the LED array 21 as described above, it is possible to realize a direction indicator display in which sequential blinking is superimposed on a conventional direction indicator with a simple blinking function where a dark spot is moved instead of a bright spot, as shown in Fig. 7, and the size of the dark spot can be made relatively large and its movement can be smoothed during the display.

Further, in the above-described embodiments, cases where the present invention is applied to a vehicular lamp system which is used as a turn lamp has been exemplified, but the scope of application of the present invention is not limited thereto, and the present invention can be applied to various vehicular lamp systems that are mounted on a vehicle and irradiate the surrounding area with light.

### DESCRIPTION OF REFERENCE NUMERALS

1: Controller
2L, 2R: Lamp unit (Vehicular lamp)
20: Drive circuit
21: LED array
22: Light emitting unit

## Claims

1. A lighting controller for a vehicular lamp to control lighting of the vehicular lamp,
wherein the lighting controller is configured to carry out control of moving a bright spot within the light emitting region in a predetermined direction, the bright spot obtained by lighting on a partial region of a light emitting region of the vehicular lamp, and during that time, the bright spot is moved so as to partially overlap a first region which is a partial region corresponding to the bright spot during a first period and a second region which is a partial region corresponding to the bright spot during a second period which follows the first period.

2. The lighting controller for a vehicular lamp according to claim 1,
wherein the light emitting region is formed by lighting on a plurality of light emitting units;
wherein the partial region corresponding to the bright spot is formed by lighting on at least two light emitting units of the plurality of light emitting units; and
wherein the first region and the second region is made to partially overlap by continuously lighting on during the second period one or more less light emitting units than the total number of the at least two light emitting units which corresponds to the first region during the first period.

3. The lighting controller for a vehicular lamp according to claim 1 or claim 2,
wherein the partial region corresponding to the bright spot has a luminance distribution such that luminance gradually decreases at least in a direction along the predetermined direction.

4. The lighting controller for a vehicular lamp according to any one of claims 1 to 3,
wherein the predetermined direction is either a direction from the inner side to the outer side of a vehicle, a direction from the outer side to the inner side of the vehicle, a direction from the bottom to the top of the vehicle, a direction from the top to the bottom of the vehicle, or a direction that combines two or more of said directions.

5. The lighting controller for a vehicular lamp according to any one of claims 1 to 4,
wherein the lighting controller is configured to carry out control of repeatedly lighting on and off the light emitting region with a first luminance, and during the light-on period with the first luminance, the bright spot is obtained by temporarily setting the partial region to a second luminance which is higher than the first luminance.

6. A lighting controller for a vehicular lamp to control lighting of the vehicular lamp,
wherein the lighting controller is configured to carry out control of lighting on and off a light emitting region of the vehicular lamp and during the light-on period, to carry out control of moving a dark spot within the light emitting region in a predetermined direction, the dark spot obtained by lighting off a partial region within the light emitting region, and during that time, the dark spot is moved so as to partially overlap a first region which is a partial region corresponding to the dark spot during a first period and a second region which is a partial region corresponding to the dark spot during a second period which follows the first period.

7. A control method for a vehicular lamp to control lighting of the vehicular lamp,
wherein the control method is configured to carry out control of moving a bright spot within the light emitting region in a predetermined direction, the bright spot obtained by lighting on a partial region of the light emitting region of the vehicular lamp, and during that time, the bright spot is moved so as to partially overlap a first region which is a partial region corresponding to the bright spot during a first period and a second region which is a partial region corresponding to the bright spot during a second period which follows the first period.

8. A control method for a vehicular lamp to control lighting of the vehicular lamp,
wherein the control method is configured to carry out control of lighting on and off a light emitting region of the vehicular lamp, and during the light-on period, to carry out control of moving a dark spot within the light emitting region in a predetermined direction, the dark spot obtained by lighting off a partial region of the light emitting region, and during that time, the dark spot is moved so as to partially overlap a first region which is a partial region corresponding to the bright spot during a first period and a second region which is a partial region corresponding to the bright spot during a second period which follows the first period.

9. A vehicular lamp system comprising:
a lighting controller according to any one of claims 1 to 6; and
a vehicular lamp controlled by the lighting controller.
